# EUROPÄISCHE PATENTSCHRIFT

(11) **EP 2 729 428 B1**
(45) Veröffentlichungstag und Bekanntmachung des Hinweises auf die Patenterteilung: **01.07.2015**
(21) Anmeldenummer: 12721253.8
(22) Anmeldetag: 09.05.2012
(51) Int. Cl.: C04B 2/12

(54) **VERFAHREN ZUM BRENNEN VON STÜCKIGEM GUT**
METHOD FOR BURNING PELLETIZED GOOD
PROCÉDÉ DE COMBUSTION D'UN PRODUIT EN MORCEAUX

(30) Priorität: 08.07.2011 DE 102011051675
(43) Veröffentlichungstag der Anmeldung: 14.05.2014
(73) Patentinhaber: Maerz Ofenbau AG, 8027 Zürich (CH)
(72) Erfinder: PIRINGER, Hannes, CH-5712 Beinwill am See (CH); BUCHER, Patrick, CH-5605 Dottikon (CH)
(74) Vertreter: Tetzner, Michael
(86) Internationale Anmeldenummer: PCT/EP2012/058549
(87) Internationale Veröffentlichungsnummer: WO 2013/007413

(56) Entgegenhaltungen:
- US-A- 1 955 255
- US-A- 4 810 190
- US-A- 6 113 387
- E. FÜSSEL, F. ZAHN: "25 years of industrial development on the parallel flow regenerative lime shaft kiln", ZEMENT-KALK-GIPS,, Bd. 35, Nr. 6, 1. Juni 1982 (1982-06-01), Seiten 290-296, XP001264821,

## Beschreibung

Die Erfindung betrifft ein Verfahren zum Brennen von stückigem Gut, insbesondere Kalkstein, Dolomitstein, Magnesitstein oder andere Karbonatgesteine, in wenigstens einem eine Vorwärmzone, eine Brennzone und eine Kühlzone umfassenden Schacht, wobei Kohle über Brennerlanzen zugeführt wird.

Die Brennstoffkosten beim Kalkbrennen sind erheblich und können mehr als 50% der Herstellkosten betragen. Da Kohle in den meisten Fällen der kostengünstigste Energieträger ist, werden heutzutage die meisten Kalköfen mit Kohle gefeuert. Kohle kann in ihren Eigenschaften aber sehr unterschiedlich sein. So wirkt sich ein hoher Gehalt an Asche und Schwefel nachteilig aus, da der Branntkalk in unerwünschter Weise kontaminiert wird.

Eine besondere Eigenschaft der Kohle ist ihr Blähgrad. Von zahlreichen praktischen Versuchen weist man, das Kohle mit einem Blähgrad von mehr als 1,0 in Kalköfen, insbesondere in Gleichstrom-Gegenstrom-Regenerativ-Kalköfen bisher nicht verwendet werden konnte, da es zu gravierenden Betriebsproblemen, wie beispielsweise dem Verstopfen der Brennerlanzen, kam. Wegen der eingeschränkten Verwendbarkeit derartigre Kohle in GGR-Kalkschachtöfen wurde bisher entweder ein Drehrohrofen eingesetzt oder man musste auf Petrolkoks bzw. auf flüssige oder gasförmige Brennstoffe ausweichen. Drehrohröfen haben jedoch den erheblichen Nachteil, dass sie 50-100% mehr Brennstoff verbrauchen als GGR-Kalköfen und dadurch in der Folge auch vielmehr CO₂ in die Atmosphäre ausgestoßen wird. Die Verwendung von Petrolkoks ist auch nachtteilig, da sein Schwefelgehalt bis zu 10-mal so hoch sein kann wie jener von Kohle, wodurch sich weitere Einschränkungen ergeben. Außerdem sind flüssige und gasförmige Brennstoffe unter Umständen nicht verfügbar oder aber wesentlich teurer als Kohle.

Die US 6 113 387 A offenbart einen Regenerativschachtofen, bei dem über Brennerlanzen Kohle in Form von Koks zugeführt wird.

Aus der DE 32 27 395 C2 ist ein Verfahren zum Herstellen von Briketts für das Festbett eines Vergaserreaktors oder Schachtofens bekannt, wobei 30 - 85% nichtbackende Rohkohle und 15 - 70% backende Rohkohle gemischt und anschließend brikettiert werden, wobei die backende Kohle eine Backfähigkeit (swelling index) von ≥ 5 aufweist.

Die Erfindung liegt die Aufgabe zugrunde ein Verfahren zum Brennen von stückigem Gut anzugeben, mit dem die Brennstoffkosten reduziert werden können.

Erfindungsgemäß wird das Verfahren zum Brennen von stückigem Gut in wenigstens einem eine Vorwärmzone, eine Brennzone und eine Kühlzone umfassenden Schacht durchgeführt, wobei Kohle mit einem Blähgrad >1, insbesondere auch >2, über Brennerlanzen zugeführt wird und die Temperatur der Kohle in den Brennerlanzen unter einem Temperaturwert gehalten wird, bei dem sich Schmelzphasen der verwendeten Kohle bilden.

In dieser Anmeldung wird der Blähgrad nach der Norm ASTM D720-91 verstanden.

Die Kohle wird üblicherweise in Form von Kohlenstaub pneumatisch über Brennerlanzen in den Ofen eingeblasen. Die Brennerlanzen befinden sich in der Vorwärmzone oder Brennzone des Schachtes und sind von stückigem Gut, insbesondere Kalkstein, umgeben. Dabei beträgt die Temperatur des stückigen Guts am oberen Ende der Vorwärmzone etwa 100°C, während sie am unteren Ende ca. 50°C unter der für das zu kalzinierende Gut typischen Kalzinierungstemperatur liegt, welche für Kalkstein typischerweise ca. 750°C bis 800°C beträgt. Durch die Wände der Brennerlanzen wird die Wärme des stückigen Guts von außen nach innen übertragen, wodurch sich die zugeführte Kohle erwärmt, bevor sie die Brennerlanzen verlässt und außerhalb derselben automatisch zündet.

Bei den der Erfindung zugrundeliegenden Versuchen hat sich gezeigt, dass Kohle mit einem Blähgrad >1 ab einer bestimmten Temperatur Schmelzphasen bildet, welche sich an den Innenwänden der Brennerlanzen festsetzen und diese nach kurzer Zeit verstopfen. Diese Ablagerungen innerhalb der Brennerlanzen können während der Regenerativphase eines Ofenschachtes außerdem zünden und dadurch die Brennerlanzen sehr schnell zerstören. Man hat festgestellt, dass gerade die flüchtigen Bestandteile der Kohle mit einem Blähgrad >1 bei Überschreitung einer bestimmten Temperatur sehr schnell zu Anbackungen führen. Bei diesem Phänomen bildet sich zuerst eine Schmelzphase, welches durch das Ausgasen der flüchtigen Bestandteile aufbläht und die Brennerlanzen schnell verstopft. Man hat festgestellt, dass die flüchtigen Bestandteile der Kohle im Bereich von 200-300°C langsam und ab 450°C schnell entweichen. Je nach Kohlesorte können diese Werte aber stark variieren.

Bei den der Erfindung zugrundeliegenden Versuchen an verschiedenen Kohlen hat sich herausgestellt, dass die Phasenumwandlungen meistens erst ab 150°C beginnen. Blähexperimente in Laboröfen haben zudem ergeben, dass das Aufblähen der Kohle je nach Kohlensorte bei unterschiedlichen Temperaturen einsetzen kann. Typischerweise liegt diese Temperatur bei etwa 250°C. Hält man die Temperatur der Kohle in den Brennerlanzen jedoch unter dem Temperaturwert, bei dem sich Schmelzphasen der verwendeten Kohle bilden, kann Kohle mit einem Blähgrad >1 problemlos eingesetzt werden. Insbesondere in Nordamerika gibt es große Vorkommen von kostengünstiger Kohle, die einen erhöhten Blähgrad von > 1 aufweist. Mit dem oben beschriebenen Verfahren kann nun diese kostengünstige Kohle in einem Kalkschachtofen eingesetzt werden, wodurch die Brennstoffkosten gegenüber der bisher verwendeten Kohle deutlich reduziert werden können.

Weitere Ausgestaltungen der Erfindung sind Gegenstand der Unteransprüche.

Die Brennerlanzen sind vorzugsweise in der Vorwärmzone oder der Brennzone des Schachtes angeordnet und stehen mit dem dort befindlichen stückigen Gut zur Erwärmung der Kohle in Wirkkontakt. Dabei wird die Temperatur der Kohle in den Brennerlanzen zweckmäßigerweise unter 250°C, vorzugsweise unter 200°C und höchstvorzugsweise unter 150°C gehalten.

Um diese Temperaturwerte einzuhalten, können ein oder mehrere der nachfolgend aufgeführten Maßnahmen ergriffen werden:
- Die Brennerlanzen werden mit einer Isolierung versehen, um dadurch den Wärmefluss von außen nach innen durch die Wandung der Brennerlanzen stark zu reduzieren, wodurch sich die Kohle entsprechend weniger erwärmt. Diese Maßnahme hat den Vorteil, dass der thermische Wirkungsgrad des Kalkofens nicht beeinträchtigt wird;
- Die Brennerlanzen werden gekühlt, wobei die Kühlung beispielsweise mit einem Gas oder einer Flüssigkeit erfolgen kann. So könnten beispielsweise die Brennerlanzen mit einer Ummantelung versehen werden, welche mit Wasser, Thermalöl oder Luft gekühlt wird. Auch dieses Verfahren hat nur einen unwesentlichen Einfluss auf den thermischen Wirkungsgrad des Kalkofens;
- Die Kohle wird vor der Zuführung zu den Brennerlanzen gekühlt oder die Kohle wird mit einem Transportgas über die Brennerlanzen zugeführt, wobei die Temperatur der Kohle über die Menge und/oder Temperatur des Transportgases eingestellt wird. Durch diese Maßnahmen wird die Kohle auf eine entsprechend geringere Temperatur innerhalb der Brennerlanzen erwärmt. Die Erhöhung der Transportluftmenge kann jedoch nur sehr eingeschränkt angewendet werden, da sich der thermische Wirkungsgrad eines GGR-Kalköfens mit zunehmender Luftmenge entsprechend verschlechtert, außerdem steigt die Abgastemperatur des Ofens entsprechend an;
- Nicht brennbare Komponenten, insbesondere CaO- oder CaCO₃-haltige Komponenten werden zusammen mit der Kohle in die Brennerlanzen eingeführt, um die Temperatur der Kohle einzustellen. Hierfür könnte man beispielsweise den Staub aus Ofenabgasfiltern beimischen, um den Massenstrom zu erhöhen. Ein solcher Filterstaub stellt kein artfremdes Material dar, sodass es auch nicht zu einer Kontaminierung des Produktes kommt;
- Eine Flüssigkeit, insbesondere Wasser wird über die Brennerlanzen eingeführt. Durch das Verdampfen des Wassers kann die Temperaturerhöhung der Kohle entsprechend begrenzt werden;
- Es werden kürzere Brennerlanzen verwendet oder eine radiale Anordnung vorgesehen. Durch diese Maßnahmen ergeben sich kleinere Oberflächen der Brennerlanzen, wodurch sich die Kohle entsprechend weniger stark erwärmt;
- Es wird eine Simultanfeuerung von Kohle und Gas vorgesehen. Dabei wird die Kohle und das Gas gleichzeitig über die Brennerlanzen zugeführt. Je geringer der Heizwert des Gases wäre, umso höher ist dessen Massenstrom, welcher die Kohle kühlen würde.

Im Folgenden werden weitere Ausgestaltungen der Erfindung an einem konkreten Ausführungsbeispiel näher beschrieben.

In der Zeichnung zeigen
- Fig. 1: eine Querschnittsdarstellung eines Gleichstrom-Gegenstrom-Regenerativ-Kalkofens,
- Fig. 2: eine vergrößerte Detaildarstellung im Bereich der Brennerlanzen und
- Fig. 3: ein Diagramm, das den Verlauf der Temperatur längs der Ofenachse zeigt.

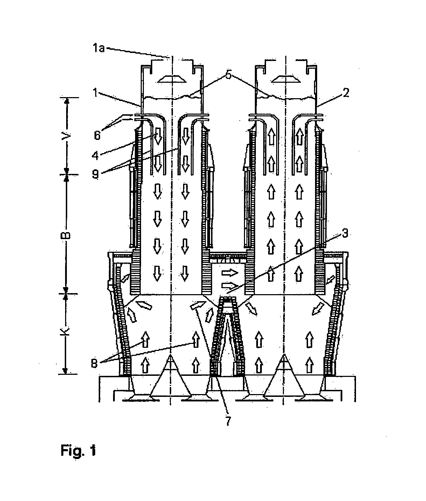

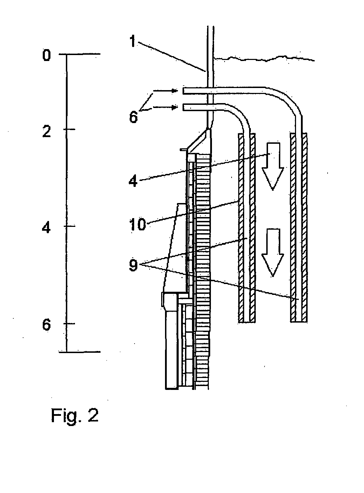

In Fig. 1 und 2 ist ein Gleichstrom-Gegenstrom-Regenerativ-Kalkofen dargestellt, der zwei Schächte 1, 2 mit jeweils einer Vorwärmzone V, einer Brennzone B und eine Kühlzone K sowie einen die beiden Schächte verbindenden Überstromkanal 3 aufweist. Beide Schächte werden in an sich bekannter Art und Weise abwechselnd als Brennschacht und Abgasschacht betrieben, wobei dem Brennschacht Verbrennungsluft 4 im Gleichstrom mit zu brennenden stückigen Gut 5 und Kohle 6 zugeführt werden. Bei dem stückigen Gut handelt es sich hier um Kalkstein. Die dabei entstehenden heißen Abgase 7 werden zusammen mit der von unten zugeführten erwärmten Kühlluft 8 über den Überstromkanal 3 in den Abgasschacht geleitet, wo die Abgase im Gegenstrom zum Kalkstein nach oben geleitet werden und den Kalkstein dabei vorwärmen. Nach einer vorgegebenen Zeitspanne von beispielsweise 15 min. wird die Funktion der beiden Schächte vertauscht, d. h. der Brennschacht wird zum Abgasschacht und umgekehrt. Dieses Verfahren erlaubt ein sehr effizientes Brennen des Kalksteins im Gleichstrom mit den Verbrennungsgasen und ein regeneratives Vorwärmen des Kalksteins in Gegenstrom zu den heißen Abgasen.

Die Kohle 6, die einen Blähgrad >1, insbesondere auch >2 aufweist, wird über Brennerlanzen 9 zugeführt.

Die Brennerlanzen 9 sind im dargestellten Ausführungsbeispiel im Bereich der Vorwärmzone V im Wesentlichen in Richtung der Schachtlängsachse 1a angeordnet und sind von dem Kalkstein umgeben. Der Brennstoff wird in Form von Kohlepulver mit Hilfe eines Transportgases über die Brennerlanzen zugeführt und erwärmt sich aufgrund der vom Kalkstein über die Wandung der Brennerlanzen nach innen übertragenden Wärme, sodass sich die Kohle 6 nach Austritt aus der Brennerlanze 9 mit der von oben in den Schacht eingeführten Verbrennungsluft 4 automatisch entzündet. Um nun die bei Verwendung von Kohle mit einem Blähgrad >1 gefürchteten Verstopfungen in den Brennerlanzen 9 zu vermeiden, müssen geeignete Maßnahmen ergriffen werden, damit die Kohle in den Brennerlanzen unter einem Temperaturwert gehalten wird, bei dem sich Schmelzphasen der verwendeten Kohle bilden. Je nach verwendeter Kohle liegt dieser Temperaturwert beispielsweise bei 250°C. Durch Abstimmung auf einen Temperaturwert von 200°C oder gar 150°C können die Anbackungen bei allen bisher bekannten Kohlearten vermieden werden.

Eine besonders zweckmäßige Maßnahme zur Reduzierung der Erwärmung der Kohle in den Brennerlanzen 9 stellt die Verwendung einer Isolierung 10 der Brennerlanze dar. Alternativ oder zusätzlich können auch ein oder mehrere der oben bereits erwähnten weiteren Maßnahmen zum Einsatz kommen.

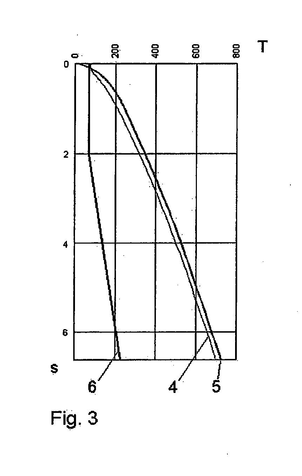

Im Diagramm gemäß Fig. 3 ist der Verlauf der Temperatur der zugeführten Kohle 6, der Verbrennungsluft 4 und des stückigen Guts (Kalkstein) 5 längs der Ofenachse 1a dargestellt. Abgebildet ist dabei der Bereich der Vorwärmzone von der Oberfläche des zu brennenden Kalksteins bis zum unteren Ende der Brennerlanzen 9.

Die Temperatur der Kohle erreicht in diesem Ausführungsbeispiel etwa 200°C am Austritt der Brennerlanzen 9. Der Kalkstein und die Verbrennungsluft 4 werden in diesem Bereich auf etwa 700°C erwärmt.

## Patentansprüche

1. Verfahren zum Brennen von stückigem Gut (5) in wenigstens einem eine Vorwärmzone (V), eine Brennzone (B) und eine Kühlzone (K) umfassenden Schacht (1, 2), wobei Kohle (6) über Brennerlanzen (9) zugeführt wird,
**dadurch gekennzeichnet, dass** Kohle (6) mit einem Blähgrad > 1 zugeführt wird und die Temperatur der Kohle (6) in den Brennerlanzen (9) unter einem Temperaturwert gehalten wird, bei dem sich Schmelzphasen der verwendeten Kohle (6) bilden.

2. Verfahren nach Anspruch 1, **dadurch gekennzeichnet, dass** die Brennerlanzen (9) in der Vorwärmzone (V) oder der Brennzone (B) des Schachts (1, 2) angeordnet sind und mit dem dort befindlichen stückigen Gut (5) zur Erwärmung der Kohle (6) in den Brennerlanzen (9) in Wirkkontakt stehen.

3. Verfahren nach Anspruch 1, **dadurch gekennzeichnet, dass** die Temperatur der Kohle (6) in den Brennerlanzen (9) unter 250°C, vorzugsweise unter 200°C und höchstvorzugsweise unter 150°C, gehalten wird.

4. Verfahren nach Anspruch 1, **dadurch gekennzeichnet, dass** die Brennerlanzen (9) mit einer Isolierung (10) versehen werden.

5. Verfahren nach Anspruch 1, **dadurch gekennzeichnet, dass** die Brennerlanzen (9) gekühlt werden.

6. Verfahren nach Anspruch 1, **dadurch gekennzeichnet, dass** die Kohle (6) vor der Zuführung zu den Brennerlanzen (9) gekühlt wird.

7. Verfahren nach Anspruch 1, **dadurch gekennzeichnet, dass** die Kohle (6) mit einem Transportgas über die Brennerlanzen (9) zugeführt wird und die Temperatur der Kohle (6) über die Menge und/oder Temperatur des Transportgases eingestellt wird.

8. Verfahren nach Anspruch 1, **dadurch gekennzeichnet, dass** nicht brennbare Komponenten, insbesondere CaO- oder CaCO3-haltige Komponenten, in die Brennerlanzen (9) eingeführt werden, um die Temperatur der Kohle (6) einzustellen.

9. Verfahren nach Anspruch 1, **dadurch gekennzeichnet, dass** eine Flüssigkeit, insbesondere Wasser, in die Brennerlanzen (9) eingeführt wird, um die Temperatur der Kohle (6) einzustellen.

10. Verfahren nach Anspruch 1, **dadurch gekennzeichnet, dass** das Brennen des stückigen Guts (5) in einem Gleichstrom-Gegenstrom-Regenerativ-Kalkofens erfolgt, der wenigstens zwei Schächte (1, 2) mit jeweils einer Vorwärmzone (V), einer Brennzone (B) und einer Kühlzone (K) sowie einen die beiden Schächte (1, 2) verbindenden Überströmkanal (3) aufweist, wobei die beiden Schächte (1, 2) abwechselnd als Brennschacht und Abgasschacht betrieben werden.

## Claims

1. Method for burning fragmented material (5) in at least one shaft (1, 2) which comprises a preheating zone (V), a combustion zone (B) and a cooling zone (K), coal (6) being supplied via combustion lances (9),
**characterised in that** coal (6) having a swelling index > 1 is supplied and the temperature of the coal (6) in the combustion lances (9) is maintained below a temperature value at which melting phases of the coal (6) used are formed.

2. Method according to claim 1, **characterised in that** the combustion lances (9) are arranged in the preheating zone (V) or the combustion zone (B) of the shaft (1, 2) and are in operational contact with the fragmented material (5) located there in order to heat the coal (6) in the combustion lances (9).

3. Method according to claim 1, **characterised in that** the temperature of the coal (6) in the combustion lances (9) is kept below 250°C, preferably below 200°C and in a most preferable manner below 150°C.

4. Method according to claim 1, **characterised in that** the combustion lances (9) are provided with an insulation (10).

5. Method according to claim 1, **characterised in that** the combustion lances (9) are cooled.

6. Method according to claim 1, **characterised in that** the coal (6) is cooled before being supplied to the combustion lances (9).

7. Method according to claim 1, **characterised in that** the coal (6) is supplied with a transport gas via the combustion lances (9) and the temperature of the coal (6) is adjusted by means of the quantity and/or temperature of the transport gas.

8. Method according to claim 1, **characterised in that** non-combustible components, in particular CaO or CaCO₃-containing components, are introduced into the combustion lances (9) in order to adjust the temperature of the coal (6).

9. Method according to claim 1, **characterised in that** a fluid, in particular water, is introduced into the combustion lances (9) in order to adjust the temperature of the coal (6).

10. Method according to claim 1, **characterised in that** the combustion of the fragmented material (5) is carried out in a co-current/counter-current regenerative lime kiln, which has at least two shafts (1, 2) each having a preheating zone (V), a combustion zone (B) and a cooling zone (K) and an overflow channel (3) which connects the two shafts (1, 2), the two shafts (1, 2) being operated alternately as a combustion shaft and an exhaust gas shaft.

## Revendications

1. Procédé de combustion d'un produit en morceaux (5) dans au moins une cuve (1, 2) comprenant une zone de préchauffage (V), une zone de combustion (B) et une zone de refroidissement (K), sachant que le charbon (6) est amené par l'intermédiaire de lances de brûleur (9),
**caractérisé en ce que** le charbon (6) est amené avec un degré de gonflement > 1 et q u e la température du charbon (6), dans les lances de brûleur (9), est maintenue au-dessous d'une valeur de température à laquelle se forme une phase fondue du charbon (6) utilisé.

2. Procédé selon la revendication 1,
**caractérisé en ce que** les lances de brûleur (9) sont disposées dans la zone de préchauffage (V) ou dans la zone de combustion (B) de la cuve (1, 2) et sont en contact actif avec le produit en morceaux (5) y présents pour chauffer le charbon (6) dans les lances de brûleur (9).

3. Procédé selon la revendication 1,
**caractérisé en ce que** la température du charbon (6) dans les lances de brûleur (9) est maintenue au-dessous de 250 °C, de préférence au-dessous de 200 °C et au mieux au-dessous de 150 °C.

4. Procédé selon la revendication 1,
**caractérisé en ce que** les lances de brûleur (9) sont dotées d'une isolation (10).

5. Procédé selon la revendication 1,
**caractérisé en ce que** les lances de brûleur (9) sont refroidies.

6. Procédé selon la revendication 1,
**caractérisé en ce que** le charbon (6) est refroidi avant l'amenée aux lances de brûleur (9).

7. Procédé selon la revendication 1,
**caractérisé en ce que** le charbon (6) est amené avec un gaz de transport, par l'intermédiaire des lances de brûleur et q u e la température du charbon (6) est réglée par l'intermédiaire de la quantité et / ou de la température du gaz de transport.

8. Procédé selon la revendication 1,
**caractérisé en ce que** des composants non combustibles, en particulier des composants contenant du CaO ou du CaCO3, sont introduits dans les lances de bruleur (9) pour régler la température du charbon (6).

9. Procédé selon la revendication 1,
**caractérisé en ce que**, pour régler la température du charbon (6), un liquide, en particulier de l'eau, est introduit dans les lances de brûleur (9).

10. Procédé selon la revendication 1,
**caractérisé en ce que** la combustion de produit en morceaux (5) est effectuée dans un four à chaux régénérateur à équicourant - contrecourant qui est doté au moins deux cuves (1, 2) qui comportent chacune une zone de préchauffage (V), une zone de combustion (B) et une zone de refroidissement (K), ainsi qu'un canal de passage (3) qui relie les deux cuves (1, 2), sachant que les deux cuves (1, 2) sont utilisées alternativement en tant que cuve de combustion et cuve de gaz d'échappement.
